# NOUVEAU FASCICULE DE BREVET EUROPEEN

(11) **EP 1 097 321 B2**
(45) Date de publication et mention de la décision concernant l'opposition: **20.02.2008**
(45) Mention de la délivrance du brevet: 02.10.2002
(21) Numéro de dépôt: 99932930.3
(22) Date de dépôt: 21.07.1999
(51) Int. Cl.: F16H 61/40

(54) **DISPOSITIF DE VALVE POUR UN MOTEUR HYDRAULIQUE APTE A ENTRAINER UNE MASSE D'INERTIE IMPORTANTE**
VENTILEINRICHTUNG FÜR EINEN HYDRAULISCHEN MOTOR ZUM ANTREIBEN EINER GROSSEN TRÄGHEITSMASSE
VALVE DEVICE FOR HYDRAULIC ENGINE FOR DRIVING A LARGE FLYWHEEL MASS

(30) Priorité: 22.07.1998 FR 9809354
(43) Date de publication de la demande: 09.05.2001
(73) Titulaire: POCLAIN HYDRAULICS INDUSTRIE, 60411 Verberie (FR)
(72) Inventeur: LEBRUN, Jean-Pierre, F-60940 Monceaux (FR)
(74) Mandataire: Intes, Didier Gérard André
(86) Numéro de dépôt international: PCT/FR1999/001783
(87) Numéro de publication internationale: WO 2000/005520

(56) Documents cités:
- EP-A- 0 457 913
- DE-A- 2 517 835
- DE-A- 3 330 849
- DE-A- 4 235 698
- DE-A- 4 342 309
- DE-A- 4 402 580
- DE-C- 2 220 571
- US-A- 4 520 625
- PATENT ABSTRACTS OF JAPAN vol. 011, no. 218 (M-607), 15 juillet 1987 (1987-07-15) & JP 62 033945 A (HITACHI CONSTR MACH CO LTD), 13 février 1987 (1987-02-13)
- PATENT ABSTRACTS OF JAPAN vol. 007, no. 005 (M-184), 11 janvier 1983 (1983-01-11) & JP 57 163703 A (HITACHI KENKI KK), 8 octobre 1982 (1982-10-08)

## Description

La présente invention concerne circuit d'alimentation d'un moteur hydraulique apte à entraîner une masse d'inertie importante, selon le préambule de la revendication 1.

Dans la suite, la masse que le moteur sert à entraîner sera dénommée "masse entraînée".

Le moteur auquel s'applique ce dispositif de valve sert par exemple à assurer la rotation d'une tourelle d'un engin tel qu'une pelle hydraulique, ou à assurer la translation d'engins à chenilles ou à pneus ayant une masse importante.

Il peut s'agir d'un moteur hydraulique de type dit "moteur rapide" (1000 à 2000 tr/mn) entraînant un réducteur ou d'un moteur dit "moteur lent" (dont la vitesse de rotation est par exemple de l'ordre de 100 tr/mn), par exemple du type à pistons radiaux.

En fonctionnement, une circulation de fluide est entretenue dans le moteur, les conduites principales étant raccordées à des orifices principaux du moteur (servant à l'alimentation et à l'échappement), de sorte que l'une des conduites principales est mise en pression pour jouer le rôle de conduite d'alimentation, tandis que l'autre de ces conduites est en dépression relative et est raccordée à une évacuation de fluide pour jouer le rôle de conduite d'échappement.

A partir d'une situation de fonctionnement à une vitesse d'entraînement donnée, l'arrêt du moteur est obtenu en réalisant une phase de décélération, puis en obturant les conduites d'alimentation et d'échappement. Pendant la phase de décélération, la pression dans la conduite d'alimentation devient la basse pression, tandis que la pression dans la conduite d'échappement devient la haute pression. Finalement, lors de l'obturation des conduites principales du moteur, c'est-à-dire lors de l'isolement de ce moteur, le fluide situé dans la conduite d'échappement se trouve à une pression supérieure à celle du fluide situé dans la conduite d'alimentation. Ce phénomène est encore renforcé par le fait que, en raison de son inertie importante, la masse entraînée a tendance à continuer son mouvement initial.

Sur un terrain plat, l'équilibre du système n'est atteint que lorsque les pressions dans les conduites d'alimentation et d'échappement sont sensiblement égales. Sur un terrain en pente ou lorsque la masse entraînée est disposée en dévers, l'équilibre du système est atteint lorsque la différence entre les pressions dans la conduite d'alimentation et dans la conduite d'échappement atteint une valeur donnée (positive ou négative) qui permet de compenser la pente pour maintenir la masse immobile.

En tout état de cause, pour que le moteur et la masse entraînée soient effectivement arrêtés dans une position stable, il faut que la différence de pression entre les conduites d'alimentation et d'échappement atteigne une valeur donnée, nulle, positive ou négative.

On a indiqué précédemment que lors de l'obturation des conduites d'alimentation et d'échappement, la conduite d'échappement se trouve en surpression, surpression qui est encore augmentée par l'inertie de la masse entraînée. Cette surpression tend à repousser la masse entraînée dans un mouvement de retour en sens contraire, ce qui revient à basculer vers la conduite d'alimentation qui est obturée, la surpression de la conduite d'échappement qui est également obturée.

Par ailleurs, le fluide hydraulique est légèrement compressible. De ce fait, après l'isolement du moteur, la masse d'inertie continue son mouvement jusqu'à ce que la pression dans la conduite d'échappement atteigne une valeur maximale correspondant à la compression du fluide présent dans cette conduite. Le mouvement de retour de la masse aura pour effet d'augmenter la pression dans la conduite d'alimentation jusqu'à porter le fluide présent dans cette conduite à une pression de compression sensiblement égale à la pression maximale qui régnait dans la conduite d'échappement juste avant que ne s'amorce cette phase de retour.

Bien entendu, cette phase de retour est suivie d'une nouvelle phase de déplacement dans le sens initial, au cours de laquelle il se produit une détente dans la conduite d'alimentation et une compression dans la conduite d'échappement.

Ainsi, après l'obturation des conduites d'alimentation et d'échappement, la masse entraînée est animée d'un mouvement oscillant dont la fréquence, pour des tourelles d'engins tels que des pelles hydrauliques, est de l'ordre de 1 Hz. Bien que ce mouvement oscillant ait une amplitude relativement faible et qu'il soit finalement naturellement freiné du fait des phénomènes de frottement, il est évidemment extrêmement gênant, en particulier lorsqu'il s'agit de placer la masse entraînée par le moteur dans une position très précise en arrêtant le moteur sans freinage mécanique.

Paradoxalement, ce phénomène de mouvement oscillant était moins gênant lorsque les entraînements étaient réalisés à l'aide de moteurs peu performants dans lesquels des fuites relativement importantes limitaient la compression dans les conduites d'alimentation et d'échappement. Les moteurs ont été peu à peu perfectionnés, en particulier pour en améliorer le rendement, pour diminuer la durée des phases d'accélération et pour faciliter les manutentions dans des conditions difficiles, par exemple en dévers.

Pour limiter les oscillations, c'est-à-dire pour en réduire l'amplitude et finalement les stopper, il est connu d'utiliser un système d'amortissement consistant à créer, entre les conduites d'alimentation et d'échappement, des fuites qui viennent alimenter un volume de transfert. A la suite de l'isolement du moteur, la différence de pression entre les conduites d'alimentation et d'échappement peut être au moins partiellement compensée par le fluide disponible dans ce volume de transfert.

Un autre système consiste à autoriser des fuites en permanence entre les conduites d'alimentation et d'échappement du moteur.

Ces systèmes ne donnent pas entière satisfaction dans la mesure où ils reviennent à diminuer le rendement du moteur que l'on a par ailleurs cherché à augmenter en perfectionnant ce moteur et où ils rendent pratiquement impossible un positionnement précis de la masse entraînée à l'arrêt du moteur. En effet, par exemple lorsque le moteur sert à entraîner la tourelle d'une pelle hydraulique, l'arrêt effectif de la tourelle se fera avec un écart angulaire correspondant à la mise en circulation du fluide disponible dans le volume de transfert, par rapport à la position angulaire cible dans laquelle l'isolement du moteur a été commandé.

EP-A-0 457 913 divulgue un circuit selon le préambule de la revendication 1, ayant un dispositif visant à éviter les phénomènes de cavitation et à limiter ou réduire les chocs lors de l'arrêt d'un moteur entraînant une masse d'inertie importante.

Ce dispositif comprend une valve qui comporte un premier et un deuxième conduit principal respectivement destinés à être raccordés aux deux conduites principales du circuit de fluide et un conduit auxiliaire destiné à être raccordé à la conduite auxiliaire dudit circuit, le dispositif étant susceptible de présenter une première configuration dans laquelle, la pression de fluide dans le premier conduit principal étant supérieure à la pression de fluide dans le deuxième conduit principal, ledit deuxième conduit principal est raccordé au conduit auxiliaire tandis que le premier conduit principal est isolé du deuxième conduit principal et du conduit auxiliaire, ainsi qu'une deuxième configuration dans laquelle, la pression de fluide dans le deuxième conduit principal étant supérieure à la pression de fluide dans le premier conduit principal, ledit premier conduit principal est raccordé au conduit auxiliaire tandis que le deuxième conduit principal est isolé du premier conduit principal et du conduit auxiliaire.

Cette valve permet de relier au conduit auxiliaire la conduite principale qui, lors de l'arrêt du moteur, se trouve mise à une basse pression, ce qui permet d'éviter la cavitation dans cette conduite. En d'autres termes, cette valve sert uniquement à sélectionner la conduite qui est à la basse pression et à la raccorder à une pression de gavage.

Ce dispositif ne permet toutefois pas d'éviter que des oscillations peu freinées ne succèdent à l'arrêt du moteur. En effet, en fonction de ces oscillations, la valve passe alternativement de sa première à sa deuxième configuration, sans limiter rapidement les écarts de pression entre les deux conduites principales.

DE4342309, DE 4235698 et DE 22 20571 divulguent des circuits d'entraînement d'un engin, équipés de valves de freinage pour éviter l'emballement du moteur. Ils ne concernent pas l'amortissement des oscillations évoquées plus haut.

L'invention vise à remédier aux inconvénients précités en proposant un dispositif simple et fiable, qui permette de freiner et d'annuler très rapidement les oscillations du système après l'isolement du moteur, quelles que soient les conditions d'entraînement de la masse, en particulier qu'elle soit entraînée sur un terrain en pente ou en dévers, ou sur un terrain plat.

Ce but est atteint grâce aux caractéristiques de la partie caractérisante de la revendication 1.

Pour expliquer le fonctionnement du dispositif, on considère par exemple que le premier conduit principal du dispositif est raccordé à la conduite d'échappement et que le deuxième conduit principal est raccordé à la conduite d'alimentation.

Comme on l'a indiqué précédemment, lors de la décélération puis de l'arrêt du moteur (obturation des conduites principales), la pression de fluide dans la conduite d'échappement est supérieure à la pression de fluide dans la conduite d'alimentation. Par conséquent, durant la phase de décélération et jusqu'à l'arrêt du moteur, le dispositif de valve selon l'invention reste dans sa première configuration, la conduite d'alimentation étant mise à la pression de la conduite auxiliaire.

Du fait de son inertie importante, la masse entraînée continue son mouvement initial jusqu'à ce que la pression dans la conduite d'échappement atteigne une valeur maximale (compression). A partir de cette situation, la masse entraînée amorce un mouvement de retour au cours duquel la différence entre les pressions dans les conduites d'échappement et d'alimentation diminue jusqu'à devenir sensiblement nulle puis change de signe.

En effet, lorsque la différence de pression s'annule, la masse continue son mouvement sous l'effet de son inertie, ce qui a tendance à faire augmenter la pression dans la conduite d'alimentation par compression et à faire diminuer la pression dans la conduite d'échappement.

Au moment de ce changement de signe, le dispositif est sollicité vers sa deuxième configuration dans laquelle la conduite d'alimentation est isolée tandis que la conduite d'échappement est mise à la pression de la conduite auxiliaire.

Si les moyens de temporisation n'étaient pas présents, le passage de la première à la deuxième configuration serait trop rapide et la conduite d'alimentation, isolée dès le changement de signe de la différence de pression entre les conduites d'alimentation et d'échappement, verrait sa pression augmenter rapidement et/ou fortement par la compression due au mouvement de la masse entraînée jusqu'à la fin d'une oscillation de cette dernière, puis le mouvement de cette masse, généré par la pression élevée dans la conduite d'alimentation, reprendrait en sens inverse et ainsi de suite, de sorte qu'un régime d'oscillations peu freinées se mettrait en place.

Grâce à la présence des moyens de temporisation, on fait en sorte que, pendant un temps donné de "temporisation", le dispositif reste dans sa première configuration malgré le changement de signe de la différence de pression entre les conduites d'alimentation et d'échappement. Pendant ce temps de temporisation, l'augmentation de la pression dans la conduite d'alimentation est très limitée, puisque le deuxième conduit principal du dispositif (celui qui est lié à cette conduite d'alimentation) reste en communication avec la conduite auxiliaire.

Ainsi, à la fin du mouvement de retour de la masse entraînée, la pression dans la conduite d'alimentation ne sera tout au plus que très légèrement supérieure à la pression dans la conduite d'échappement, de sorte que la masse entraînée ne sera tout au plus sollicitée que sur un nouveau mouvement en sens inverse (à nouveau dans le sens de "l'aller") de faible amplitude à l'occasion duquel, lors du nouveau changement de signe de la différence de pression entre les conduites d'alimentation et d'échappement, les moyens de temporisation joueront à nouveau leur rôle en limitant l'augmentation de la pression dans la conduite d'échappement. On peut déterminer les moyens de temporisation de telle sorte que les pressions dans les conduites d'alimentation et d'échappement soient sensiblement égales dès la fin du mouvement de retour, afin que le nouveau mouvement dans le sens de l'aller ne se produise pas.

Ainsi, grâce aux moyens de temporisation, les oscillations de la masse entraînée voient leur amplitude diminuer très rapidement jusqu'à l'arrêt complet de la masse.

Selon un mode de réalisation particulièrement avantageux, le dispositif comporte un organe mobile susceptible d'être sollicité entre deux positions extrêmes en fonction de la différence entre les pressions de fluide régnant dans les premier et deuxième conduits principaux et, dans ces première et deuxième positions extrêmes, ledit organe mobile met le deuxième conduit principal, respectivement le premier conduit principal, en communication avec le conduit auxiliaire par l'intermédiaire d'un passage de restriction calibré.

Ainsi, le dispositif de valve est réalisé de manière simple, les deux positions extrêmes de l'organe mobile correspondant aux première et deuxième configurations évoquées précédemment.

La présence du passage de restriction calibrée occasionne, entre le conduit auxiliaire et celui des conduits principaux auxquels il est raccordé, une perte de charge permettant de faire en sorte que la pression augmente effectivement dans le conduit principal malgré son raccordement au conduit auxiliaire. Ainsi, la pression dans ce conduit principal pourra augmenter jusqu'à devenir supérieure à la pression dans l'autre conduit principal qui, au départ, était la plus forte, de sorte que le changement de signe de la différence de pression conditionnant le déplacement de l'organe mobile vers son autre position extrême pourra s'opérer.

Avantageusement, cet organe mobile est susceptible d'occuper une troisième position, dite position intermédiaire. Selon une première variante, les conduits principaux et le conduit auxiliaire sont isolés les uns des autres dans cette position intermédiaire tandis que, selon une deuxième variante, ils sont au contraire raccordés les uns aux autres dans ladite position intermédiaire.

Selon un mode de réalisation particulièrement avantageux, l'organe mobile est formé par un tiroir monté coulissant dans un alésage auquel sont raccordés les deux conduits principaux, un conduit de communication raccordé en permanence au conduit auxiliaire étant relié à cet alésage, dans une portion de ce dernier qui s'étend entre les zones de raccordement des deux conduits principaux à l'alésage. Le tiroir présente des moyens de mise en communication sélective (par exemple une gorge annulaire) qui, dans la première position extrême du tiroir, établissent une liaison entre le deuxième conduit principal et le conduit de communication et qui, dans la deuxième position extrême du tiroir, établissent une liaison entre le premier conduit principal et ledit conduit de communication, le fluide circulant dans ces liaisons passant par des moyens de restriction calibrés. Le tiroir comporte également des moyens d'obturation (par exemple les régions de sa paroi périphérique axiale qui sont exemptes de la gorge) qui, dans la première position extrême du tiroir, isolent le premier conduit principal du conduit de communication et qui, dans la deuxième position extrême de ce tiroir, isolent le deuxième conduit principal du conduit de communication.

Avantageusement, le tiroir est déplacé entre ses deux positions extrêmes sous l'effet de l'augmentation de la pression de fluide dans une première chambre de commande, respectivement dans une deuxième chambre de commande, respectivement reliées en permanence au premier et au deuxième conduit principal.

Les moyens de temporisation comprennent avantageusement une première et une deuxième chambre d'amortissement respectivement situées à une première et une deuxième extrémité du tiroir, ces première et deuxième chambres d'amortissement étant en communication permanente avec le conduit auxiliaire par l'intermédiaire de moyens de restriction calibrés pour gêner l'écoulement du fluide au moins dans le sens de la vidange de ces chambres.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- les figures 1 à 3 montrent, en coupe axiale, un dispositif pour un circuit conforme à l'invention selon un premier mode de réalisation, dans trois situations différentes,
- la figure 4 illustre un circuit hydraulique d'alimentation d'un moteur hydraulique incluant un dispositif conforme aux figures 1 à 3 et
- les figures 5 à 7 montrent un dispositif pour un circuit conforme à l'invention, selon un deuxième mode de réalisation, dans trois situations différentes.

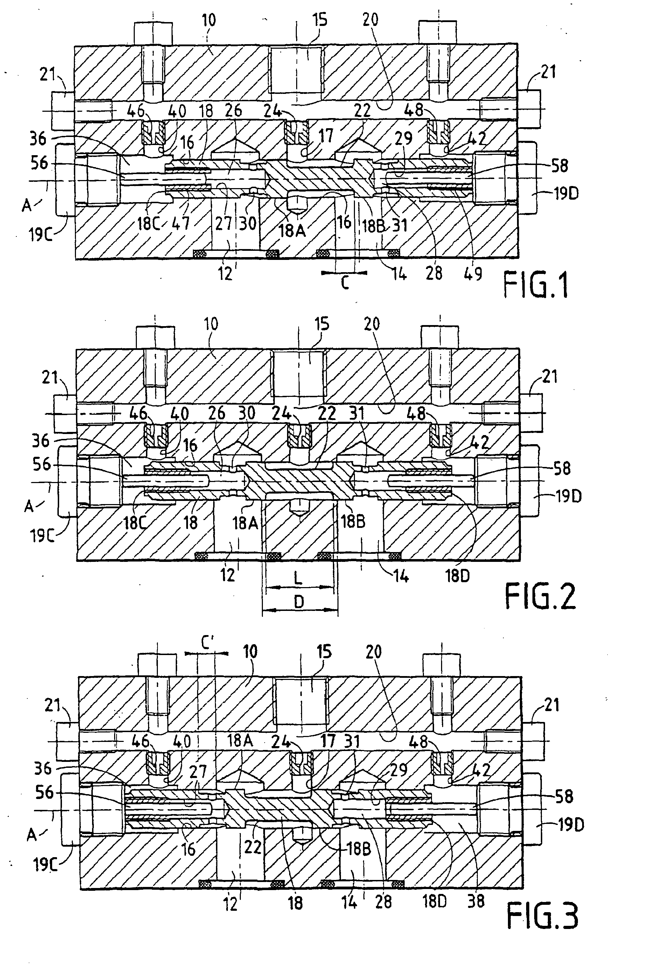

Le dispositif représenté sur les figures 1 à 3 comporte un corps 10 dans lequel sont percés deux conduits principaux 12 et 14, respectivement destinés à être raccordés au conduit d'alimentation et au conduit d'échappement d'un moteur hydraulique, ainsi qu'un conduit auxiliaire 15 destiné à être raccordé à une conduite auxiliaire du circuit, dans laquelle la pression de fluide est inférieure à la pression d'alimentation du moteur.

Un alésage 16 est pratiqué dans le corps 10, cet alésage présentant une portion médiane qui s'étend entre les zones de raccordement des deux conduits principaux 12 et 14 audit alésage, portion médiane de part et d'autre de laquelle s'étendent deux portions extrêmes.

Un tiroir 18 est monté coulissant dans l'alésage 16. Dans toute la suite, on considérera que la direction axiale est celle de l'axe A selon lequel se déplace ce tiroir.

Le corps 10 présente encore un conduit de communication 17 qui est relié en permanence au conduit auxiliaire 15 et à l'alésage 16. Plus précisément, un conduit axial 20 traverse de part en part le corps 10, en étant fermé à ses deux extrémités par des bouchons 21. Les conduits 15 et 17 s'étendent transversalement en prolongement l'un de l'autre et sont formés par un perçage qui traverse le conduit 20.

Une gorge annulaire 22 est pratiquée sur la périphérie axiale du tiroir, dans une région médiane de ce dernier.

Dans la première position extrême du tiroir, représentée sur la figure 1, le deuxième conduit principal 14 est relié au conduit de communication 17 par cette gorge 22. Dans le même temps, le premier conduit principal 12 est isolé des conduits 14 et 15 par coopération entre la paroi de l'alésage et une portion 18A de la paroi du tiroir voisine de la gorge 22. On voit qu'une pièce de restriction 24 qui forme un passage de restriction calibré est disposée dans le conduit de communication 17. Par conséquent, dans la première position du tiroir, la liaison entre les conduits 14 et 15 se fait par l'intermédiaire d'un passage de restriction calibré formé par cette pièce 24.

Le tiroir 18 peut également occuper une deuxième position extrême, représentée sur la figure 3, dans laquelle la gorge 22 met cette fois le premier conduit principal 12 en communication avec le conduit de communication 17 et donc avec le conduit auxiliaire 15, tandis que le deuxième conduit principal 14 est isolé par la coopération entre la paroi de l'alésage 16 et une portion 18B de la paroi périphérique du tiroir voisine de la gorge 22. Dans cette position, la liaison entre le conduit principal 12 et le conduit auxiliaire 15 se fait également par l'intermédiaire de la pièce de restriction calibrée 24.

Comme on l'a indiqué précédemment, la présence de moyens de restriction calibrés dans la communication entre le conduit 12 et le conduit 15 ou le conduit 14 et le conduit 15 occasionne une perte de charge qui permet, malgré cette communication, l'augmentation de la pression dans le conduit principal considéré.

Sur la figure 2, on a représenté une position intermédiaire du tiroir, dans laquelle il se trouve à mi-course entre ses deux positions extrêmes. On voit que, dans cette situation, la gorge 22 est isolée des conduits 12 et 14. Par conséquent, grâce aux portions 18A et 18B de la périphérie du tiroir, les conduits 12 et 14 et le conduit auxiliaire 15 sont isolés les uns des autres dans cette position intermédiaire. En effet, la longueur L de la gorge 22 est inférieure à la plus petite distance D entre les conduits 12 et 14, dans leurs zones de raccordement avec l'alésage 16. De ce fait, lorsque la pression augmente dans le conduit 14, celui-ci est isolé de la conduite 15 lorsque le tiroir, ayant entamé son déplacement vers sa deuxième position extrême, a atteint sa position intermédiaire.

Le dispositif de valve comprend les moyens de commande pour le placer dans sa première ou dans sa deuxième configuration. Dans l'exemple représenté, ces moyens de commande comprennent une première et une deuxième chambre de commande 26 et 28 qui sont toutes deux ménagées dans le tiroir 18. La première chambre 26 est reliée en permanence au premier conduit principal 12 alors qu'elle est isolée du deuxième conduit principal 14. La situation est inverse pour la deuxième chambre 28, qui est reliée en permanence au conduit 14 en étant isolée du conduit 12. Par exemple, les chambres 26 et 28 sont réalisées dans des alésages borgnes 27 et 29, qui débouchent respectivement sur les première et deuxième extrémités axiales 18C et 18D du tiroir. Comme on le verra dans la suite, ces chambres 26 et 28 sont toutefois fermées du côté de ces extrémités axiales.

Des perçages radiaux 30 et 31 s'étendent respectivement entre les alésages 27 et 29 et la périphérie axiale du tiroir. Ainsi, le ou les perçages 30 établissent une communication permanente entre le conduit 12 et la chambre 26, tandis que le ou les perçages 31 établissent une communication permanente entre le conduit 14 et la chambre 28. Pour faciliter cette mise en communication permanente, les perçages 30 et 31 sont éventuellement ménagés dans des gorges.

Les moyens de restriction réalisés à l'aide de la pièce 24, peuvent également être réalisés d'une autre manière, par exemple par un dimensionnement très précis de la gorge 22 ou par des restrictions situées dans les conduits 12 et 14 sans toutefois empêcher la communication des chambres 26 et 28 avec ces conduits.

A partir de la première position extrême du tiroir représentée sur la figure 1, dans laquelle la pression dans le conduit 14 est inférieure à la pression dans le conduit 12, on comprend que, si la pression dans ce conduit 14 augmente jusqu'à devenir supérieure à la pression dans le conduit 12 (la différence de pression change de signe), la pression dans la chambre 28 devient évidement également supérieure à la pression dans la chambre 26, ce qui provoque le déplacement du tiroir vers sa deuxième position extrême, en passant par sa position intermédiaire.

Dans l'exemple représenté, les parois des chambres 26 et 28 qui sont du côté des extrémités 18C et 18D du tiroir sont fixes, de sorte que l'augmentation de la pression dans l'une de ces chambres, qui provoque un déplacement du tiroir, se traduit également par une augmentation du volume de la chambre considérée.

Le dispositif comporte également des moyens de temporisation qui servent à limiter la vitesse de passage du tiroir entre l'une et l'autre de ses positions extrêmes. En d'autres termes, les moyens de temporisation servent à retarder ou à gêner le déplacement du tiroir, sans pour autant l'empêcher. Dans l'exemple représenté, ces moyens de temporisation comprennent une première chambre d'amortissement 36, située du côté de la première extrémité 18C du tiroir, et une deuxième chambre d'amortissement 38, située du côté de la deuxième extrémité 18D de ce tiroir. Plus précisément, l'alésage 16 traverse le corps 10 de part en part, ses deux extrémités étant fermées par des bouchons, respectivement 19C du côté de l'extrémité 18C du tiroir et 19D du côté de l'extrémité 18D.

Ainsi, la chambre 36 est ménagée entre le bouchon 19C, la paroi de l'alésage 16 et l'extrémité 18C du tiroir, tandis que la chambre 38 est ménagée entre le bouchon 19D, la paroi de l'alésage 16, et l'extrémité 18D du tiroir.

Les chambres 36 et 38 sont en communication permanente avec le conduit auxiliaire 15 par l'intermédiaire de moyens de restriction calibrés pour gêner l'écoulement du fluide au moins dans le sens de la vidange de ces chambres.

Plus précisément, les chambres 36 et 38 sont reliées au conduit axial 20 par des conduits transversaux de liaison, respectivement 40 et 42. Une pièce 46 formant une restriction calibrée est disposée dans le conduit de liaison 40, tandis qu'une pièce analogue 48 est disposée dans le conduit de liaison 42. Ainsi, les chambres 36 et 38 communiquent avec le conduit 20 (et donc avec le conduit 15) par l'intermédiaire de passages de restriction calibrés formés par les pièces 46 et 48.

Bien que le fluide soit légèrement compressible, il est nécessaire que la chambre d'amortissement 36 se vidange pour que, sous l'effet de la pression de fluide agissant dans la chambre 28, le tiroir se déplace de sa première position extrême de la figure 1 vers sa deuxième position extrême de la figure 3. Toutefois, cette vidange de la chambre 36 est gênée du fait de la présence de la restriction 46, ce qui ralentit le déplacement du tiroir.

De ce fait, lorsque la pression dans le conduit 14 devient supérieure à la pression du conduit 12, ce conduit 14 continue d'être en communication avec le conduit auxiliaire 15 pendant une durée de temporisation qui dépend notamment du dimensionnement de la restriction 46, ce qui ralentit et limite l'augmentation de la pression dans le conduit 14.

Grâce à la restriction 48, la situation est analogue lorsque le tiroir tend à se déplacer vers sa première position extrême à partir de sa deuxième position extrême.

L'usinage du corps 10 est simplifié en utilisant le même conduit axial 20 pour mettre en communication le conduit 17 et les conduits 40 et 42 avec le conduit auxiliaire 15. On pourrait toutefois prévoir un premier perçage servant à mettre le conduit 17 en communication avec le conduit 15 et un deuxième perçage distinct servant à mettre les conduits 40 et 42 en communication. Dans ce cas, on pourrait n'utiliser qu'une seule pièce de restriction disposée dans ce deuxième perçage.

Les première et deuxième chambres de commande 26 et 28 présentent chacune une surface utile sur laquelle agit la pression de fluide pour provoquer le déplacement du tiroir vers sa première, respectivement vers sa deuxième position. De même, les chambres d'amortissement 36 et 38 présentent chacune une surface utile sur laquelle agit la pression de fluide pour gêner la diminution du volume de cette chambre.

Pour chaque ensemble d'une chambre de commande (par exemple la chambre 28) et de la chambre d'amortissement (par exemple la chambre 36) associée, dont la vidange est nécessaire au déplacement du tiroir 18 dans le sens commandé par une augmentation de la pression dans cette chambre de commande, le rapport entre la surface utile de la chambre de commande et la surface utile de la chambre d'amortissement constitue un paramètre de contrôle de la vitesse de déplacement du tiroir dans le sens de la vidange de la chambre d'amortissement considérée.

Les sections de passage des restrictions 46 et 48, ainsi que ces rapports entre les surfaces utiles des chambres de commande et d'amortissement associées, pourront être déterminés à l'aide de simulations pour obtenir, dans l'un ou l'autre sens de déplacement du tiroir, la durée de temporisation souhaitée. La plupart du temps, on choisira des durées de temporisations égales pour les deux sens de déplacement.

On a indiqué précédemment que les chambres 26 et 28 étaient formées dans les alésages borgnes, fermés du côté de l'extrémité 18C ou 18D du tiroir. Plus précisément, la première chambre de commande 26 est séparée de la première chambre d'amortissement 36 par une première tige cylindrique 56 de faible section qui est disposée dans l'alésage borgne 27, de même que la deuxième chambre de commande 28 est séparée de la deuxième chambre d'amortissement 38 par une deuxième tige cylindrique 58 de faible section disposée dans l'alésage 29.

Les tiges 56 et 58 sont disposées dans des chemises, respectivement 47 et 49, dans les alésages 27 et 29. Un contact de glissement (rendu sensiblement étanche par un jeu fonctionnel minimal) s'établit entre ces tiges et ces chemises, de sorte que les tiges 56 et 58 restent globalement fixes lors du déplacement du tiroir. La surface utile de la première chambre de commande 26 est déterminée par la surface de l'extrémité libre de la tige 56 qui se trouve dans cette chambre, de même que la surface utile de la deuxième chambre de commande 28 est déterminée par la surface de l'extrémité libre de la tige 58 qui se trouve dans cette chambre.

En revanche, la surface utile de la chambre d'amortissement 36 est fonction de la section de la première extrémité du tiroir 18C, déduction éventuellement faite de la section de la tige 56, de même que la surface utile de la deuxième chambre d'amortissement 38 est fonction de la section de l'extrémité 18D du tiroir, déduction éventuellement faite de la section de la tige 58.

Un autre paramètre influençant le temps d'amortissement est le "volume d'amortissement". Le volume d'amortissement de la chambre d'amortissement 36 est le volume qui doit être évacué de cette chambre pour permettre le déplacement du tiroir 18 sur la course C qu'il effectue pour passer de sa première position à sa position dans laquelle, la portion de paroi 18B parvenant contre la paroi de l'alésage 16, le deuxième conduit principal 14 est isolé du conduit auxiliaire 15. De même, le volume d'amortissement de la chambre 38 est le volume qui doit être évacué de cette chambre pour permettre le déplacement du tiroir 18 sur la course C' qu'il effectue pour passer de sa deuxième position à sa position dans laquelle le premier conduit principal 12 est isolé du conduit auxiliaire 15. En général, on choisira les mêmes volumes d'amortissement pour les chambres 36 et 38.

Avantageusement. les tiges cylindriques 56 et 58 sont respectivement montées libres dans les alésages 27 et 29 (plus précisément, dans les chemises 47 et 49). Ceci facilite le montage de ces tiges en évitant les problèmes de concentricité entre les tiges et les alésages.

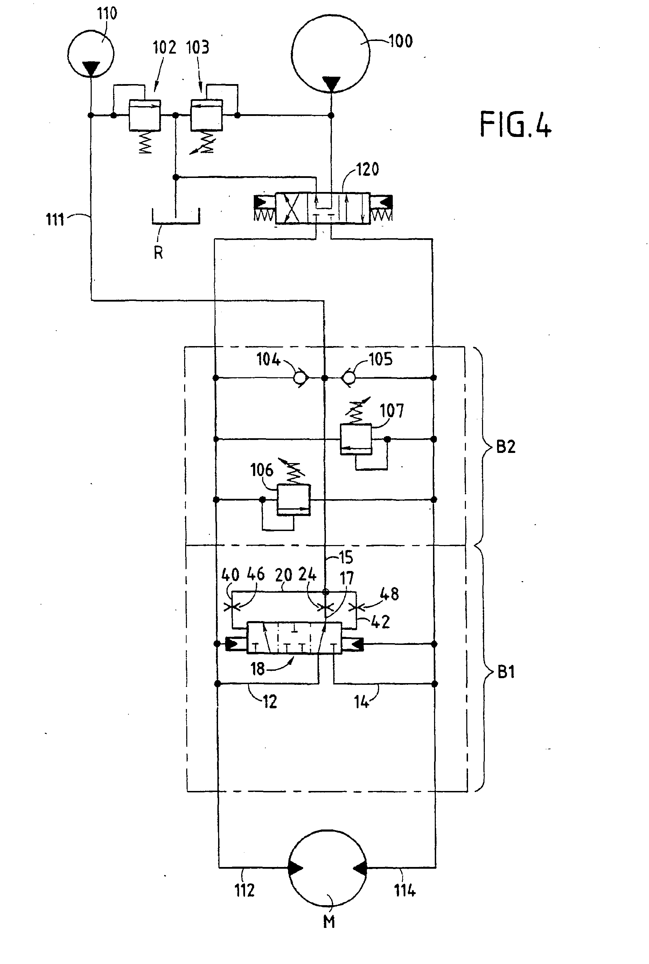

En référence à la figure 4, on décrit maintenant un circuit hydraulique intégrant le dispositif des figures 1 à 3 représenté de manière schématique. Ce circuit est du type dit "circuit ouvert" dans la mesure où la pompe hydraulique 100 qui sert à l'alimentation du moteur M est une pompe à un seul sens de fonctionnement, l'échappement de fluide étant raccordé à un réservoir R à la pression atmosphérique. Le moteur M comprend des conduites principales 112 et 114 qui, selon le sens de fonctionnement conditionné par l'une ou l'autre des positions extrêmes d'une valve de distribution 120, servent à l'alimentation ou à l'échappement du moteur.

De manière connue en soi, le circuit comprend également une pompe de gavage 110 et des limiteurs de pression 102 et 103. La pompe de gavage 110 sert à assurer une pression minimale donnée dans les conduites 112 et 114. De manière connue en soi, elle est raccordée à ces conduites par une conduite de gavage 111 et des clapets anti-retour 104 et 105, associés à des limiteurs de pression 106 et 107.

La figure 4 illustre la situation d'isolement du moteur, dans laquelle la valve 120 occupe une position intermédiaire qui obture les conduites 112 et 114, le fluide est délivré par la pompe allant directement au réservoir R. La pompe de gavage 110 sert à assurer une pression minimale donnée dans les conduites 112 et 114. Elle est raccordée à ces conduites par des clapets anti-retour 104 et 105, associés à des limiteurs de pression 106 et 107.

Le dispositif de l'invention est situé dans le bloc B1 de la figure 4. On reconnaît en effet la représentation normalisée du dispositif de valve avec le tiroir mobile 18 mobile entre trois positions. On a indiqué les conduits principaux 12 et 14, respectivement reliés aux conduites principales 112 et 114, ainsi que le conduit auxiliaire 15, relié à la pompe de gavage 110.

Sur la figure 4, le tiroir est représenté dans sa deuxième position extrême, dans laquelle le conduit 14 est isolé des conduites 112 et 115 qui sont raccordées entre elles. En d'autres termes, la conduite principale 114 du moteur est isolée des conduites 112 et 115 qui sont raccordées entre elles.

Sur la figure 4, on a également schématisé le conduit 20 et les conduits de communication 17 et de liaison 40 et 42, avec leurs restrictions 24, 46 et 48.

L'ensemble du bloc B1 peut faire partie d'un bloc hydraulique destiné à être fixé sur le carter du moteur hydraulique M. Ce bloc B1 peut, avec le bloc B2 qui comprend les clapets anti-retour 104 et 105, ainsi que les limiteurs de pression 106 et 107 constituer un même bloc hydraulique fixé ("flasqué") sur le carter du moteur. Ce dernier peut être un moteur à cylindrée unique ou à plusieurs cylindrées de fonctionnement, auquel cas le bloc hydraulique comprenant le bloc B1 peut également comprendre les moyens de sélection de la cylindrée du moteur. Par ailleurs, on a représenté le dispositif conforme à l'invention associé à un seul moteur M.

En particulier, pour l'entraînement en translation d'une masse extrêmement lourde, on peut prévoir d'utiliser un groupe de plusieurs moteurs disposés en série ou en parallèle. Dans ce cas, ce dispositif peut être associé à l'ensemble des moteurs de ce groupe, les premier et deuxième conduits principaux 12 et 14 étant respectivement raccordés aux lignes d'alimentation et d'échappement d'un moteur du groupe ou du groupe de moteurs.

Le conduit auxiliaire 15 du dispositif est raccordé à la conduite de gavage 111, alimentée par la pompe de gavage 110. En d'autres termes, la conduite auxiliaire évoquée précédemment est une conduite de gavage du circuit, dans laquelle le fluide est maintenu à une pression donnée, inférieure à la pression d'alimentation.

Bien que le circuit représenté sur la figure 4 soit un circuit ouvert, le dispositif de valve conforme à l'invention peut également être intégré dans un circuit de type fermé, dans lequel la pompe a une sortie de fluide à haute pression pour alimenter la conduite d'alimentation et une entrée de fluide à basse pression raccordée à la conduite d'échappement. La pompe peut être à cylindrée fixe ou variable, elle peut avoir deux sens de rotation pour sélectivement alimenter l'une ou l'autre des conduites principales, ou n'avoir qu'un seul sens de rotation, auquel cas un sélecteur du type du sélecteur 120 de la figure 4 permet le raccordement sélectif des conduites d'alimentation ou d'échappement aux orifices de sortie et d'entrée de la pompe.

La pompe de gavage a pour but de permettre, lorsque le moteur est arrêté, de maintenir une pression donnée, dite de gavage, dans l'ensemble des conduites du circuit et, lors du fonctionnement du moteur, de maintenir les conduits reliés à l'échappement à la pression de gavage. Ainsi, la conduite de gavage est une pression basse par rapport à la pression d'alimentation du moteur.

Une fois la masse entraînée stabilisée, les conduites principales d'alimentation et d'échappement se trouveront normalement à cette pression de gavage (à une légère différence près si la masse entraînée s'arrête en dévers). Le fait que le conduit auxiliaire du dispositif de valve selon l'invention soit raccordé à cette conduite de gavage permet donc, selon la configuration de ce dispositif, de placer les conduites d'alimentation et d'échappement à la pression de gavage qui sera la leur à l'arrêt complet du moteur (sauf éventuellement en dévers).

De plus, on établit ainsi une circulation de fluide de type fermé entre les conduites d'alimentation et d'échappement et la conduite de gavage. Par conséquent, l'amortissement des oscillations de la masse entraînée se fait sans consommation de fluide.

Classiquement, la pression de gavage est de l'ordre de 5 à 30 bar, selon que le circuit est de type ouvert ou fermé. Par exemple, pour un type de moteur hydraulique fonctionnant jusqu'à des pressions de 300 bar, on choisira pour les conduits principaux 12 et 14 un diamètre d'environ 12 mm, pour la restriction 24, un diamètre d'environ 1 mm et, pour les restrictions 46 et 48, un diamètre d'environ 0,3 mm. Dans le même exemple, le rapport entre la surface utile des chambres de commande et la surface utile des chambres d'amortissement sera de l'ordre de 1/10, tandis que le volume d'amortissement, égal pour les deux chambres d'amortissement sera de l'ordre de 0,5 cm³.

Le moteur hydraulique peut être un moteur à piston radiaux, dont les orifices principaux sont disposés sur la partie de carter qui entoure le distributeur interne de fluide de ce moteur, cette partie de carter étant dénommée "couvercle de distribution". Le bloc hydraulique B1, voire l'ensemble des blocs B1 et B2 de la figure 4, peut alors être intégré dans ce couvercle de distribution.

Si le moteur a plusieurs cylindrés de fonctionnement, il peut posséder plusieurs orifices principaux d'alimentation ou d'échappement de fluide (par exemple, pour un sens donné de rotation du moteur, un premier orifice qui sert à l'alimentation, un deuxième orifice qui sert à l'échappement, et un troisième orifice qui sert soit à l'alimentation, soit à l'échappement, selon que le moteur fonctionne en grande ou en petite cylindrée). Dans ce cas, le dispositif de valve conforme à l'invention peut être interposé entre le premier et le deuxième orifice évoqué ci-dessus.

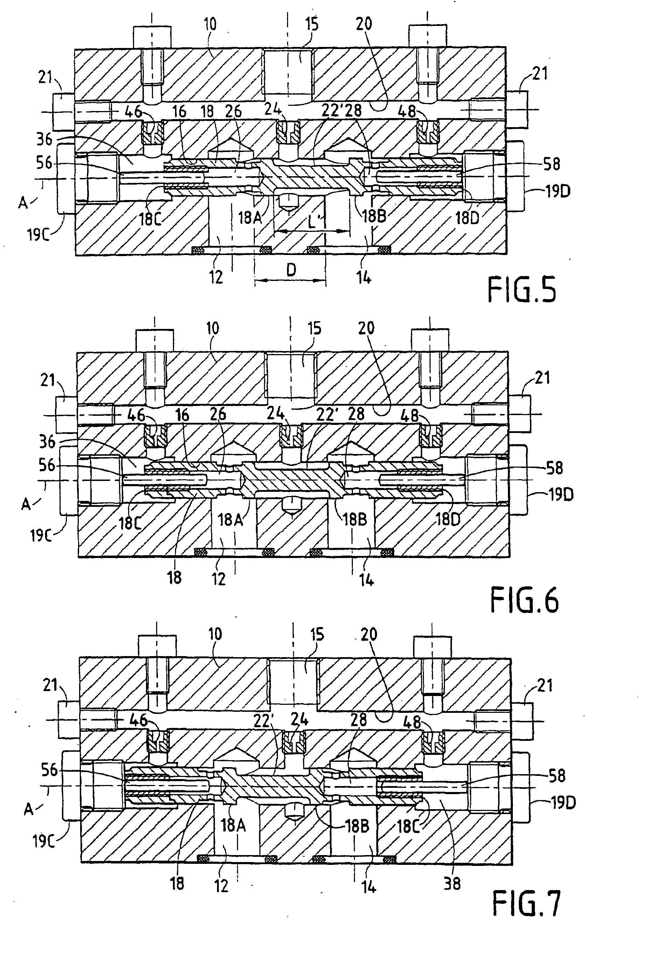

Les figures 5 à 7 montrent une variante du dispositif des figures 1 à 3, qui s'en distingue seulement par la conformation de la gorge du tiroir, de sorte que tous les éléments du dispositif des figures 5 à 7 hormis cette gorge sont affectés des mêmes références que sur les figures 1 à 3.

Ainsi, sur les figures 5 à 7, la gorge du tiroir est désignée par la référence 22'. On remarque cette fois que sa longueur L' est supérieure à la plus petite distance D entre les conduits principaux 12 et 14. Par conséquent, dans les première et deuxième positions extrêmes du tiroir représentées sur les figures 5 et 7, la situation est la même que, respectivement, sur les figures 1 et 3.

En revanche, dans la position intermédiaire du tiroir représenté sur la figure 6, cette gorge est disposée à la fois en regard de la zone de raccordement du conduit de communication 17 avec l'alésage 16, et en regard des zones de raccordement des premier et deuxième conduits principaux 12 et 14 avec cet alésage.

En d'autres termes, dans la position intermédiaire du tiroir, la gorge 22' établit une communication entre le premier conduit principal 12, le deuxième conduit principal 14 et le conduit auxiliaire 15. Bien entendu, il importe que cette situation intermédiaire ne soit que provisoire et que la longueur L' ne soit que peu supérieure à la distance D, pour occasionner des pertes de charge permettant tout de même l'augmentation de la pression dans le conduit 12 ou dans le conduit 14.

Cette configuration de la gorge est apte à accélérer le processus d'amortissement des oscillations. En effet, si à partir de la situation de la figure 5, la pression augmente dans le conduit 14 sous l'effet d'un rebond de la masse entraînée due à son inertie, on a déjà vu que grâce aux moyens de temporisation, le tiroir ne se déplace pas instantanément vers sa position de la figure 7, mais permet "d'évacuer" une partie de la pression montant dans le conduit 14 par le conduit 15.

Ce phénomène d'évacuation est encore renforcé lorsque, dans la situation intermédiaire de la figure 6, le fluide peut directement passer du conduit 14 vers le conduit 12 grâce à la gorge 22' (en d'autres termes, la restriction 24 est alors court-circuitée), ce qui équilibre plus rapidement les pressions entre les conduits 12 et 14 que dans le cas de la figure 2.

Le dispositif qui vient d'être décrit en relation aux figures 5 à 7 peut être disposé, à la place de celui des figures 1 à 3, dans le bloc B1 du circuit de la figure 4, pour fonctionner de la même manière. Bien entendu, dans l'un ou l'autre cas, le circuit peut être "ouvert" comme le montre la figure 4 ou "fermé", selon le type de pompe utilisé.

Sur un terrain en pente ou en dévers, la masse entraînée, après son arrêt complet, est naturellement soumise à une contrainte (gravité) qui doit être compensée par le moteur à l'arrêt pour maintenir cette masse en position. De ce fait, l'une des conduites principales du moteur (donc l'un des conduits principaux du dispositif de l'invention) est en légère surpression et le tiroir 18 occupe alors sa position extrême correspondante.

## Revendications

1. Circuit hydraulique d'alimentation d'un moteur hydraulique (M) apte à entraîner une masse d'inertie importante, le circuit comprenant deux conduites principales (112, 114) respectivement d'alimentation et d'échappement de fluide, pour l'alimentation et l'échappement du moteur, des moyens d'obturation (120) pour obturer ces conduites principales pour obtenir l'arrêt du moteur, une conduite auxiliaire (111) dans laquelle la pression de fluide est inférieure à la pression d'alimentation du moteur, le circuit comprenant en outre un dispositif de valve (10) comportant un premier et un deuxième conduit principal (12, 14) respectivement raccordés aux deux conduites principales (112, 114) entre le moteur et lesdits moyens d'obturation (120), et un conduit auxiliaire (15) raccordé à la conduite auxiliaire (111), le dispositif de valve étant susceptible de présenter une première configuration (figures 1 et 5) dans laquelle, la pression de fluide dans le premier conduit principal (12) étant supérieure à la pression de fluide dans le deuxième conduit principal (14), ledit deuxième conduit principal est raccordé au conduit auxiliaire (15) tandis que le premier conduit principal est isolé du deuxième conduit principal et du conduit auxiliaire, ainsi qu'une deuxième configuration (figures 3, 4 et 7) dans laquelle, la pression de fluide dans le deuxième conduit principal (14) étant supérieure à la pression de fluide dans le premier conduit principal (12), ledit premier conduit principal est raccordé au conduit auxiliaire (15) tandis que le deuxième conduit principal (14) est isolé du premier conduit principal et du conduit auxiliaire, le dispositif de valve étant sollicité pour passer de l'une à l'autre desdites première et deuxième configurations lorsque, alors que les conduites principales sont obturées dans la phase d'arrêt du moteur par lesdits moyens d'obturation, la différence entre les pressions dans les premier et deuxième conduits principaux (12, 14) change de signe,
**caractérisé en ce que** le dispositif de valve (10) comporte, en outre, des moyens de temporisation (36, 46, 38, 48) aptes à limiter la vitesse de passage entre l'une et l'autre des première et deuxième configurations lorsque ledit dispositif est sollicité pour passer de l'une à l'autre desdites configurations par un changement de signe de la différence entre les pressions dans les premier et deuxième conduits principaux (12, 14) alors que les conduites principales sont obturées dans la phase d'arrêt du moteur.

2. Circuit selon la revendication 1, **caractérisé en ce que** le dispositif de valve (10) comporte un organe mobile (18) susceptible d'être sollicité entre deux positions extrêmes en fonction de la différence entre les pressions de fluide régnant dans les premier et deuxième conduits principaux (12, 14) et **en ce que**, dans ses première et deuxième positions extrêmes, ledit organe mobile met le deuxième conduit principal (14), respectivement le premier conduit principal (12), en communication avec le conduit auxiliaire (15) par l'intermédiaire d'un passage de restriction (24) calibré.

3. Circuit selon la revendication 2, **caractérisé en ce que** l'organe mobile (18) est susceptible d'occuper une troisième position (figure 2), dite position intermédiaire, dans laquelle les conduits principaux (12, 14) et le conduit (15) auxiliaire sont isolés les uns des autres.

4. Circuit selon la revendication 2, **caractérisé en ce que** l'organe mobile (18) est susceptible d'occuper une troisième position (figure 6), dite position intermédiaire, dans laquelle les conduits principaux (12, 14) et le conduit auxiliaire (15) sont raccordés les uns aux autres.

5. Circuit selon l'une quelconque des revendications 2 à 4, **caractérisé en ce que** l'organe mobile est formé par un tiroir (18) monté coulissant dans un alésage (16) auquel sont raccordés les deux conduits principaux (12, 14), un conduit de communication (17) raccordé en permanence au conduit auxiliaire (15) étant relié à cet alésage (16), dans une portion de ce dernier qui s'étend entre les zones de raccordement des deux conduits principaux à l'alésage, **en ce que** ce tiroir présente des moyens (22, 22') de mise en communication sélective qui, dans la première position extrême du tiroir (18), établissent une liaison entre le deuxième conduit principal (14) et le conduit de communication (17) et qui, dans la deuxième position extrême du tiroir, établissent une liaison entre le premier conduit principal (12) et ledit conduit de communication, le fluide circulant dans lesdites liaisons passant par des moyens de restriction calibrée (24), ainsi que des moyens d'obturation (18A, 18B) qui, dans la première position extrême de ce tiroir (18), isolent le premier conduit principal (12) du conduit de communication (17) et qui, dans la deuxième position extrême du tiroir, isolent le deuxième conduit principal (14) du conduit de communication (17).

6. Circuit selon la revendication 5, **caractérisé en ce que** le conduit de communication (17) présente un passage de restriction calibré (24).

7. Circuit selon la revendication 5 ou 6, **caractérisé en ce que** le tiroir (18) présente une gorge annulaire (22, 22') qui est disposée en permanence en regard de la zone de raccordement du conduit de communication (17) avec l'alésage (16) et qui, dans la première (figures 1 et 5), respectivement la deuxième (figures 3 et 7), position extrême du tiroir (18), est disposée en regard de la zone de raccordement du deuxième (14), respectivement du premier (12), conduit principal avec l'alésage (16) en étant isolée de la zone de raccordement du premier (12) respectivement du deuxième (14), conduit principal avec l'alésage (16).

8. Circuit selon les revendications 3 et 7, **caractérisé en ce que** la gorge annulaire (22) du tiroir (18) présente une longueur (L) telle qu'il existe une position intermédiaire du tiroir dans laquelle cette gorge est disposée en regard de la zone de raccordement du conduit de communication (17) avec l'alésage (16) tout en étant isolée des zones de raccordement des premier et deuxième conduits principaux (12, 14) avec l'alésage.

9. Circuit selon les revendications 4 et 7, **caractérisé en ce que** la gorge annulaire (22') du tiroir (18) présente une longueur (L') telle qu'il existe une position intermédiaire du tiroir dans laquelle cette gorge (22') est disposée à la fois en regard de la zone de raccordement du conduit de communication (17) avec l'alésage (16) et en regard des zones de raccordement des premier et deuxième conduits principaux (12, 14) avec l'alésage.

10. Circuit selon l'une quelconque des revendications 5 à 9, **caractérisé en ce qu'**il comprend une première chambre de commande (26), ménagée dans le tiroir (18) et reliée en permanence (30) au premier conduit principal (12) en étant isolée du deuxième conduit principal (14), ainsi qu'une deuxième chambre de commande (28), également ménagée dans le tiroir (18) et reliée en permanence (31) au deuxième conduit principal (14) en étant isolée du premier conduit principal (12), une augmentation de la pression de fluide dans la première (26), respectivement dans la deuxième (28) chambre de commande par rapport à la pression de fluide dans la deuxième (28), respectivement dans la première (26) chambre de commande, due à la différence entre les pressions de fluide dans les premier et deuxième conduits principaux (12, 14), étant apte à provoquer le déplacement du tiroir (18) vers sa première, respectivement vers sa deuxième position extrême.

11. Circuit selon l'une quelconque des revendications 5 à 10, **caractérisé en ce que** les moyens de temporisation comprennent une première et une deuxième chambre d'amortissement (36, 38) respectivement situées à une première et à une deuxième extrémité (18C, 18D) du tiroir (18), ces première et deuxième chambres d'amortissement étant en communication permanente avec le conduit auxiliaire (15) par l'intermédiaire de moyens de restriction (46, 48) calibrés pour gêner l'écoulement du fluide au moins dans le sens de la vidange de ces chambres.

12. Circuit selon les revendications 10 et 11, **caractérisé en ce que** la première chambre de commande (26) est réalisée dans un premier alésage borgne (27) débouchant sur la première extrémité (18C) du tiroir (18) et est séparée de la première chambre d'amortissement (36) par une première tige cylindrique (56) disposée dans cet alésage (27) et **en ce que** la deuxième chambre de commande (28) est réalisée dans un deuxième alésage borgne (29) débouchant sur la deuxième extrémité (18D) du tiroir (18) et est séparée de la deuxième chambre d'amortissement (38) par une deuxième tige cylindrique (58) disposée dans cet alésage (29).

13. Circuit selon la revendication 12, **caractérisé en ce que** les première et deuxième tiges cylindriques (56, 58) sont respectivement montées libres dans les premier et deuxième alésages borgnes (27, 29).

14. Circuit selon l'une quelconque des revendications 1 à 13, **caractérisé en ce que** la conduite auxiliaire (111) est une conduite de gavage du circuit de fluide, dans laquelle le fluide est maintenu à une pression donnée, inférieure à la pression d'alimentation.

## Claims

1. A hydraulic feed circuit for feeding one hydraulic motor (M) suitable for driving a mass of large inertia, the circuit comprising two main ducts (112, 114), namely a fluid feed duct and a fluid discharge duct, for feeding and exhausting the motor, closure means (120) for closing off said main ducts such that the motor is no longer operating, an auxiliary duct (111) in which the fluid pressure is lower than the feed pressure of the motor, the circuit further comprising a valve device (10) including first and second main ducts (12, 14) connected to respective ones of the two main ducts (112, 114) between the motor and said closure means (120), and an auxiliary duct (15) connected to the auxiliary duct (111), the valve device being able to have a first configuration (Figures 1 and 5) in which, with the fluid pressure in the first main duct (12) being greater than the fluid pressure in the second main duct (14), said second main duct is connected to the auxiliary duct (15), while the first main duct is isolated from the second main duct and from the auxiliary duct, and a second configuration (Figures 3, 4, and 7) in which, with the fluid pressure in the second main duct (14) being greater than the fluid pressure in the first main duct (12), said first main duct is connected to the auxiliary duct (15) while the second main duct (14) is isolated from the first main duct and from the auxiliary duct, the valve device being urged to transit from one to the other of said first and second configurations when, although the main ducts are closed off by said closure means when the motor is not operating, the difference between the pressures in the first and second main ducts (12, 14) changes sign,
the circuit being **characterized in that** the valve device (10) further includes time delay means (36, 46, 38, 48) suitable for limiting the speed of transition between one and the other of the first and second configurations when said device is urged to transit from one to the other of said configurations by a change in the signs of the difference between the pressures in the first and second main ducts (12, 14) although the main ducts are closed off when the motor is not operating.

2. A circuit according to claim 1, **characterized in that** the valve device (10) includes a moving member (18) suitable for being urged between two end positions as a function of the difference between the fluid pressures prevailing in the first and second main ducts (12, 14), and **in that**, in its first and second end positions, said moving member puts the second main duct (14) or the first main duct (12) as the case may be in communication with the auxiliary duct (15) via a calibrated constriction passageway (24).

3. A circuit according to claim 2, **characterized in that** the moving member (18) is suitable for taking up a third position (Figure 2) referred to as the "intermediate position", in which the main ducts (12, 14) and the auxiliary duct (15) are isolated from one another.

4. A circuit according to claim 2, **characterized in that** the moving member (18) is suitable for taking up a third position (Figure 6) referred to as the "intermediate position", in which the main ducts (12, 14) and the auxiliary duct (15) are connected to one another.

5. A circuit according to any one of claims 2 to 4, **characterized in that** the moving member is formed by a slide (18) mounted to slide in a bore (16) to which the two main ducts (12, 14) are connected, a communication duct (17) connected continuously to the auxiliary duct (15) being connected to said bore (16), in a portion of said bore that extends between the connection zones in which the two main ducts are connected to the bore, **in that** said slide has means (22, 22') for establishing communication selectively, which means establish a link between the second main duct (14) and the communication duct (17) when the slide (18) is in its first end position, and establish a link between the first main duct (12) and said communication duct when the slide is in its second end position, the fluid flowing in said links going through calibrated constriction means (24), and secondly closure means (18A, 18B) which isolate the first main duct (12) from the communication duct (17) when the slide (18) is in its first end position, and which isolate the second main duct (14) from the communication duct (17) when the slide is in its second end position.

6. A circuit according to claim 5, **characterized in that** the communication duct (17) has a calibrated constriction passageway (24).

7. A circuit according to claim 5 or 6, **characterized in that** the slide (18) has an annular groove (22, 22') which is disposed continuously facing the connection zone in which the communication duct (17) is connected to the bore (16) and which, when the slide (18) is in the first end position (Figures 1 and 5), is disposed facing the connection zone in which the second main duct (14) is connected to the bore (16) while being isolated from the connection zone in which the first main duct (12) is connected to the bore (16), and, when the slide (18) is in the second end position (Figures 3 and 7), is disposed facing the connection zone in which the first main duct (12) is connected to the bore (16) while being isolated from the connection zone in which the second main duct (14) is connected to the bore (16).

8. A circuit according to claims 3 and 7, **characterized in that** the annular groove (22) in the slide (18) has a length (L) such that an intermediate position of the slide exists in which said groove is disposed facing the connection zone in which the communication duct (17) is connected to the bore (16) while being isolated from the connection zones in which the first and second main ducts (12, 14) are connected to the bore.

9. A circuit according to claims 4 and 7, **characterized in that** the annular groove (22') of the slide (18) has a length (L') such that an intermediate position of the slide exists in which the groove (22') is disposed facing both the connection zone in which the communication duct (17) is connected to the bore (16) and also the connection zones in which the first and second main ducts (12, 14) are connected to the bore.

10. A circuit according to any one of claims 5 to 9, **characterized in that** it includes a first control chamber (26) provided in the slide (18) and connected continuously (30) to the first main duct (12) while being isolated from the second main duct (14), and a second control chamber (28) also provided in the slide (18) and connected continuously (31) to the second main duct (14) while being isolated from the first main duct (12), an increase in the fluid pressure in the first control chamber (26) relative to the fluid pressure in the second control chamber (28), due to the difference between the fluid pressures in the first and second main ducts (12, 14), being capable of causing the slide (18) to move towards its first end position, and an increase in the fluid pressure in the second control chamber (28) relative to the fluid pressure in the first control chamber (26), due to the difference between the fluid pressures in the first and second main ducts (12, 14), being capable of causing the slide (18) to move towards its second end position.

11. A circuit according to any one of claims 5 to 10, **characterized in that** the time delay means comprise first and second damping chambers (36, 38) situated at respective ones of first and second ends (18C, 18D) of the slide (18), the first and second damping chambers being continuously in communication with the auxiliary duct (15) via calibrated constriction means (46, 48) that are calibrated to hinder the flow of fluid at least in the direction in which the chambers are emptied.

12. A circuit according to claims 10 and 11, **characterized in that** the first control chamber (26) is formed in a first blind bore (27) opening out at the first end (18C) of the slide (18), and it is separated from the first damping chamber (36) by a first cylindrical rod (56) disposed in said bore (27), and **in that** the second control chamber (28) is formed in a second blind bore (29) opening out at the second end (18D) of the slide (18), and it is separated from the second damping chamber (38) by a second cylindrical rod (58) disposed in said bore (29).

13. A circuit according to claim 12, **characterized in that** the first and second cylindrical rods (56, 58) are mounted to move freely in respective ones of the first and second blind bores (27, 29).

14. A circuit according to any one of claims 1 to 13, **characterized in that** the auxiliary duct (111) is a booster duct for boosting the fluid circuit, in which duct the fluid is maintained at a given pressure that is lower than the feed pressure.

## Patentansprüche

1. Hydraulikkreislauf zur Versorgung eines Hydraulikmotors (M), der eine große träge Masse anzutreiben vermag, wobei der Kreislauf zwei Hauptleitungen (112, 114) für den Flüssigkeitszu- bzw. -ablauf zur Versorgung und als Auslass des Motors, eine Absperreinrichtung (120) zum Absperren der Hauptleitungen, um den Motor anzuhalten, und eine Nebenleitung (111) umfasst, in der der Druck der Flüssigkeit niedriger ist als der Versorgungsdruck des Motors, wobei der Kreislauf ferner eine Ventilvorrichtung (10) mit einem ersten und einem zweiten Hauptkanal (12, 14), die jeweils mit den beiden Hauptleitungen (112, 114) zwischen dem Motor und der Absperreinrichtung (120) verbunden sind, und einem mit der Nebenleitung (111) verbundenen Nebenkanal (15) aufweist, wobei die Ventilvorrichtung eine erste Konfiguration (Fig. 1 und 5), in der, da der Flüssigkeitsdruck im ersten Hauptkanal (12) höher ist als der Flüssigkeitsdruck im zweiten Hauptkanal (14), der zweite Hauptkanal mit dem Nebenkanal (15) verbunden ist, während der erste Hauptkanal vom zweiten Hauptkanal und vom Nebenkanal abgesperrt ist, und eine zweite Konfiguration (Fig. 3, 4 und 7) einzunehmen vermag, in der, da der Flüssigkeitsdruck im zweiten Hauptkanal (14) höher ist als der Flüssigkeitsdruck im ersten Hauptkanal (12), der erste Hauptkanal mit dem Nebenkanal (15) verbunden ist, während der zweite Hauptkanal (14) vom ersten Hauptkanal und vom Nebenkanal abgesperrt ist, wobei die Ventilvorrichtung dazu gedrängt wird, aus der einen in die andere der ersten und zweiten Konfigurationen zu wechseln, wenn die Differenz zwischen den Drücken in den ersten und zweiten Hauptkanälen (12, 14) das Vorzeichen wechselt, während die Hauptleitungen während des Stillstands des Motors durch die Absperreinrichtung abgesperrt sind,
**dadurch gekennzeichnet, dass** die ventilvorrichtung (10) zudem Verzögerungsmittel (36,46, 38, 48) umfasst, die die Geschwindigkeit des Wechsels zwischen der einen und der anderen der ersten und zweiten Konfigurationen zu begrenzen vermögen, wenn die Vorrichtung durch einen Vorzeichenwechsel der Differenz zwischen den Drücken im ersten und zweiten Hauptkanal (12, 14), während die Hauptleitungen während des Stillstands des Motors abgesperrt sind, dazu gedrängt wird, aus der einen in die andere der beiden Konfigurationen zu wechseln.

2. Kreislauf nach Anspruch 1,
**dadurch gekennzeichnet, dass** die Ventilvorrichtung (10) ein bewegliches Bauteil (18) umfasst, das abhängig vom Unterschied zwischen den im ersten und zweiten Hauptkanal (12,14) herrschenden Drücken in zwei Endstellungen gedrängt wird, und dass das bewegliche Bauteil in seiner ersten und seiner zweiten Endstellung den zweiten Hauptkanal (14) bzw. den ersten Hauptkanal (12) über eine kalibrierte Drosselstelle (24) mit dem Nebenkanal (15) verbindet.

3. Kreislauf nach Anspruch 2,
**dadurch gekennzeichnet, dass** das bewegliche Bauteil (18) eine dritte sogenannte Zwischenstellung (Fig. 2) einzunehmen vermag, in der die Hauptkanäle (12, 14) und der Nebenkanal (15) voneinander abgesperrt sind.

4. Kreislauf nach Anspruch 2,
**dadurch gekennzeichnet, dass** das bewegliche Bauteil (18) eine dritte sogenannte Zwischenstellung (Fig. 6) einzunehmen vermag, in der die Hauptkanäle (12, 14) und der Nebenkanal (15) miteinander verbunden sind.

5. Kreislauf nach einem der Ansprüche 2 bis 4,
**dadurch gekennzeichnet, dass** das bewegliche Teil durch einen Schieber (18) gebildet ist, der verschiebbar in einer Bohrung (16) angebracht ist, mit der die zwei Hauptkanäle (12, 14) verbunden sind, wobei ein dauerhaft mit dem Nebenkanal (15) verbundener Verbindungskanal (17) mit der Bohrung (16) in einem Abschnitt von dieser verbunden ist, der sich zwischen den Verbindungsbereichen der zwei Hauptkanäle mit der Bohrung erstreckt, dass der Schieber Mittel (22, 22') zum selektiven Verbinden aufweist, die in der ersten Endstellung des Schiebers (18) eine Verbindung zwischen dem zweiten Hauptkanal (14) und dem Verbindungskanal (17) herstellen und in der zweiten Endstellung des Schiebers eine Verbindung zwischen dem ersten Hauptkanal (12) und dem Verbindungskanal herstellen, wobei die Flüssigkeit in diesen Verbindungen fließt und hierbei kalibrierte Drosselmittel (24) sowie Absperrmittel (18A, 18B) passiert, die in der ersten Endstellung des Schiebers (18) den ersten Hauptkanal (12) vom Verbindungskanal (17) absperren und in der zweiten Endstellung des Schiebers den zweiten Hauptkanal (14) vom Verbindungskanal (17) absperren.

6. Kreislauf nach Anspruch 5,
**dadurch gekennzeichnet, dass** der Verbindungskanal (17) eine kalibrierte Drosselstelle (24) aufweist.

7. Kreislauf nach Anspruch 5 oder 6,
**dadurch gekennzeichnet, dass** der Schieber (18) eine Ringnut (22, 22') aufweist, die ständig gegenüber dem Verbindungsbereich des Verbindungskanals (17) mit der Bohrung (16) angeordnet ist und die in der ersten (Fig. 1 und 5) bzw. zweiten (Fig. 3 und 7) Endstellung des Schiebers (18) gegenüber dem Verbindungsbereich des zweiten (14) bzw. des ersten (12) Hauptkanals mit der Bohrung (16) angeordnet ist, während sie vom Verbindungsbereich des ersten (12) bzw. des zweiten (14) Hauptkanals mit der Bohrung (16) abgesperrt ist.

8. Kreislauf nach den Ansprüchen 3 und 7,
**dadurch gekennzeichnet, dass** die Ringnut (22) des Schiebers (18) eine Länge (L) aufweist derart, dass es eine Zwischenstellung des Schiebers gibt, in der die Nut gegenüber dem Verbindungsbereich des Verbindungskanals (17) mit der Bohrung (16) angeordnet ist, wobei sie jedoch von den Verbindungsbereichen des ersten und zweiten Hauptkanals (12, 14) mit der Bohrung abgesperrt ist.

9. Kreislauf nach den Ansprüchen 4 und 7,
**dadurch gekennzeichnet, dass** die Ringnut (22') des Schiebers (18) eine Länge (L') aufweist derart, dass es eine Zwischenstellung des Schiebers gibt, in der die Nut (22') sowohl gegenüber dem Verbindungsbereich des Verbindungskanals (17) mit der Bohrung (16) als auch gegenüber den Verbindungsbereichen des ersten und zweiten Hauptkanals (12, 14) mit der Bohrung angeordnet ist.

10. Kreislauf nach einem der Ansprüche 5 bis 9,
**dadurch gekennzeichnet, dass** sie eine erste Steuerkammer (26) umfasst, die im Schieber (18) ausgebildet und ständig (30) mit dem ersten Hauptkanal (12) verbunden und hierbei vom zweiten Hauptkanal (14) abgesperrt ist, sowie eine zweite Steuerkammer (28), die gleichfalls im Schieber (18) ausgebildet und ständig (31) mit dem zweiten Hauptkanal (14) verbunden und hierbei vom ersten Hauptkanal (12) abgesperrt ist, wobei eine Erhöhung des Flüssigkeitsdrucks in der ersten (26) bzw. der zweiten (28) Steuerkammer in Bezug auf den Flüssigkeitsdruck in der zweiten (28) bzw. der ersten (26) Steuerkammer, bedingt durch den Unterschied zwischen den Flüssigkeitsdrücken im ersten bzw. zweiten Hauptkanal (12, 14), das Verschieben des Schiebers (18) in seine erste bzw. zweite Endstellung zu bewirken vermag.

11. Kreislauf nach einem der Ansprüche 5 bis 10,
**dadurch gekennzeichnet, dass** die Verzögerungsmittel eine erste und eine zweite Dämpfungskammer (36, 38) umfassen, die jeweils an einem ersten bzw. einem zweiten Ende (18C,18D) des Schiebers (18) angeordnet sind, wobei die erste und die zweite Dämpfungskammer ständig mit dem Nebenkanal (15) durch kalibrierte Drosselmittel (46, 48) verbunden sind, um das Abfließen der Flüssigkeit zumindest in der Entleerungsrichtung der Kammern zu verhindern.

12. Kreislauf nach den Ansprüchen 10 und 11,
**dadurch gekennzeichnet, dass** die erste Steuerkammer (26) in einer ersten Sackbohrung (27) ausgebildet ist, die in das erste Ende (18C) des Schiebers (18) mündet, und von der ersten Dämpfungskammer (36) durch eine erste in der Bohrung (27) angeordnete zylindrische Stange (56) getrennt ist, und dass die zweite Steuerkammer (28) in einer zweiten Sackbohrung (29) ausgeführt ist, die in das zweite Ende (18D) des Schiebers (18) mündet, und von der zweiten Dämpfungskammer (38) durch eine zweite in der Bohrung (29) angeordnete zylindrische Stange (58) getrennt ist.

13. Kreislauf nach Anspruch 12,
**dadurch gekennzeichnet, dass** die erste und die zweite zylindrische Stange (56, 58) jeweils frei beweglich in der ersten bzw. der zweiten Sackbohrung (27, 29) angebracht sind.

14. Kreislauf nach einem der Ansprüche 1 bis 13,
**dadurch gekennzeichnet, dass** die Nebenleitung (111) eine Füllleitung des Flüssigkeitskreislaufs ist, in der die Flüssigkeit bei einem bestimmten Druck gehalten wird, der niedriger als der Eingangsdruck ist.
